# EUROPEAN PATENT SPECIFICATION

(11) **EP 2 434 228 B1**
(45) Date of publication and mention of the grant of the patent: **02.06.2021**
(21) Application number: 11075216.9
(22) Date of filing: 24.09.2011
(51) Int. Cl.: F24H 3/04, F24H 3/06, F24H 3/12, F24H 9/20

(54) **Hybrid heating apparatus**
Hybride Heizvorrichtung
Appareil de chauffage hybride

(30) Priority: 24.09.2010 JP 2010213549
(43) Date of publication of application: 28.03.2012
(73) Proprietor: TOYOTOMI CO., LTD., Nagoya-shi, Aichi (JP)
(72) Inventor: Nagai, Katsuyuki , Toyotomi Co., Ltd., Nagoya-shi, Aichi (JP); Matsuyama, Ken , Toyotomi Co., Ltd., Nagoya-shi, Aichi (JP)
(74) Representative: Hoffmann, Klaus-Dieter

(56) References cited:
- JP-A- H05 322 312
- JP-A- H07 318 166
- JP-A- H07 318 167
- JP-U- H0 587 459

## Description

The present invention relates to a hybrid heating apparatus including both of a liquid fuel combustion burner device and an electric heater device.

### BACKGROUD OF THE INVENTION

Japanese Patent Application Publication No. 1995-318167 (JP1995-318167A) discloses a hot air heater including both of a liquid fuel combustion burner device and an electric heater device. JP1995-318167A discloses a technique for stopping the burner device when running out of a liquid fuel (oil) is detected and starting power supply to the electric heater device. Japanese Patent Application Publication No. 1995-318166 (JP1995-318166A) discloses a technique for stopping a burner device when running out of a liquid fuel (oil) is detected and starting power supply to an electric heater device when a given period of time. The patent application JP1995-318166A discloses a hybrid heating apparatus according to the preamble of claim 1. elapses.

### SUMMARY OF THE INVENTION

In the conventional hot air heater, heating by the electric heater device is continued after operation of the hot air heater has been switched to the heating by the electric heater. If a user forgets that the operation of the hot air heater has been switched to the heating by the electric heater device due to running out of the liquid fuel, refueling of the liquid fuel will be delayed, which leads to an unnecessary increase of the electric power loss caused by the electric heater.

An object of the present invention is to provide a hybrid heating apparatus in which heating is continued after running out of a liquid fuel and a user may be made aware that the heating by an electric heater device is performed due to running out of the liquid fuel.

A hybrid heating apparatus of the present invention is defined by the features of claim 1. It comprises a liquid fuel combustion burner device, an electric heater device, and a command generating section, as basic components. The liquid fuel combustion burner device is configured to start combustion upon receipt of a start combustion command, to stop the combustion upon receipt of a stop combustion command, and to perform combustion according to a combustion amount indicated by a combustion control command upon receipt of the combustion control command. The electric heater device is configured to start power supply to a heater portion upon receipt of a start power supply command and to stop the power supply to the heater portion upon receipt of a stop power supply command. The command generating section is configured to output the start combustion command, the stop combustion command, the start power supply command, and the stop power supply command according to one of predetermined control modes. The hybrid heating apparatus of the present invention further includes a liquid fuel sensor configured to detect running out of a liquid fuel. The command generating section includes as one of the predetermined control modes an out-of-fuel handling mode in which the stop combustion command is output when the liquid fuel sensor detects running out of the liquid fuel; the start power supply command is subsequently output; and then the stop power supply command is output when a predetermined minimum period of power supply elapses after the start power supply command has been output. According to the present invention, operation of the hybrid heating apparatus is switched to heating by the electric heater device after running out of the liquid fuel has been detected. However, when the predetermined minimum period of power supply elapses, the stop power supply command is output, and the heating by the electric heater device is thereby stopped. As a result, according to the present invention, the need for refueling may be informed to a user by the stopped heating by the electric heater device. The minimum period of power supply should be set to a period of time during which the liquid fuel may be at least refueled. Assuming that a spare fuel tank filled with the liquid fuel is present, it suffices to set this minimum period of power supply to approximately one hour.

The hybrid heating apparatus may further include an input portion for delayed refueling. By operating the input portion for delayed refueling in order to extend a period until the liquid fuel is refueled, the liquid fuel combustion burner device may be operated so that the combustion amount of the liquid fuel combustion burner device is reduced. In order to deal with such a situation, a delayed refueling mode may be included in the control modes. In the delayed refueling mode, a combustion control command for minimizing the combustion amount of the liquid fuel combustion burner device is output when a delay refueling command is input to the command generating section by operating the input portion for delayed refueling by a user; the stop combustion command is output when the liquid fuel sensor detects running out of the liquid fuel, and the start power supply command is subsequently output; and the stop power supply command is output when an extended period of power supply longer than the minimum period of power supply elapses after the start power supply command has been output. The user performs an operation to delay refueling, being conscious of a situation where refueling cannot be performed at once (due to a lack of the stored liquid fuel). Under such a situation, the user rarely forgets the need for refueling. Then, under such a situation, the user desires to extend the period of heating as long as possible. Further, under such a situation, even if running out of the liquid fuel has been detected, the liquid fuel often cannot be refueled at once. Then, the stop power supply command is output when the extended period of power supply longer than the minimum period of power supply elapses after the start power supply command has been output. With this arrangement, the user, who is conscious of running out of the liquid fuel, may be prevented as much as possible from feeling uncomfortable due to stopped heating by the electric heater device. Preferably, this extended period of power supply is a long period of time such as eight hours or half a day that makes it possible to purchase the liquid fuel.

The hybrid heating apparatus may further include a temperature sensor configured to detect a room temperature. The liquid fuel combustion burner device used in this case includes a combustion portion; a preheater configured to preheat a liquid fuel in the combustion portion before the liquid fuel combustion burner device starts the combustion; a first fan configured to supply air for combustion to the combustion portion; and an electric pump configured to supply the liquid fuel to the combustion portion. Also, the electric heater device used in this case includes a heat generation control section configured to cause the heater portion to generate heat according to an amount of heat generation indicated by a heat generation control command; and a second fan configured to supply an airflow to the heater portion in order to discharge the heat generated by the heater portion. Then, it is so arranged that the start combustion command includes a preheater power supply command for causing the preheater to perform preheating for a predetermined preheating period of time, a start blowing command for causing the first fan to start a blowing operation, and a start refueling command for causing the electric pump to start a refueling operation. Preferably, the control modes may include a start operation mode. In the start operation mode, the start combustion command is output; the start power supply command and the heat generation control command for indicating a predetermined amount of heat generation are output to the electric heater device; and then the stop power supply command is output when the room temperature exceeds a predetermined reference temperature (temperature at which heating by the electric heater device is not necessarily needed). In the start operation mode, heating by the electric heater device is performed in parallel with preheating by the preheater. Accordingly, with this arrangement, the heating by the electric heater device is performed until combustion by the combustion portion is performed on a full scale. The room temperature may thereby be increased early.

Assume that the heat generation control command is set to have a command sequence of causing the electric heater device to generate an amount of heat less than a maximum amount of heat until the predetermined preheating period of time is completed, and causing the electric heater device to generate the maximum amount of heat when the preheating period of time is completed. Then, no large current flows during the preheating period of time during which electric power is supplied to the preheater. A current that is necessary and sufficient for the preheater may be therefore applied to the preheater. When the predetermined period of time elapses, the electric heater device is made to generate the maximum amount of heat. With this arrangement, heating is performed with the maximum amount of heat generated by the electric heater device until the combustion by the burner device is performed on a full scale. Then, when the room temperature exceeds the reference temperature (which does not necessarily need the heating by the electric heater device), power supply to the electric heater device is stopped, and then heating by the burner device is performed. With this arrangement, operation of the burner device may be started without fail, and heating by the electric heater device may supplement heating by the burner device until combustion by the burner device is performed on the full scale. Then, when the room temperature exceeds the temperature sufficient for continuing heating by the burner device alone, the heating by the electric heater device is stopped. Electric power consumption may thereby be reduced.

The heat generation control command may of course cause the electric heater device to generate a maximum amount of heat when the preheating period of time is started, or when power supply to the preheater is started. With this arrangement, the room temperature may be increased to the reference temperature earliest. Further, the start power supply command and the heat generation control command may be set to be output when a predetermined period of time elapses after the preheater power supply command has been output. Thus, when power supply to the electric heater device is started, being delayed from the start of power supply to the preheater by the predetermined period of time, a large inrush current may be prevented from occurring at the start of the power supply to the preheater.

A save fuel mode may be included in the control modes. In the save fuel mode, the stop combustion command is output when the temperature sensor detects an increase in the room temperature by a predetermined temperature t1 from a set temperature T during operation of the liquid fuel combustion burner device alone ; the start power supply command is output when the room temperature subsequently decreases by a predetermined temperature t2 lower than the predetermined temperature t1; and the start combustion command is output and the stop power supply command is also output when the room temperature subsequently drops down to the set temperature T or less. In this save fuel mode, after the room temperature has exceeded the set temperature T, the room temperature is maintained within the predetermined temperature range above the set temperature T, using heating by the electric heater device Accordingly, it may be possible to reduce the number of times that the operation of the liquid fuel combustion burner device, which comparatively needs the liquid fuel, is started, thereby saving the liquid fuel and reducing odor produced due to the operation and stop of the liquid fuel combustion burner device and carbon dioxide generated due to combustion.

A parallel operation mode may be included in the control modes. In the parallel operation mode, the start power supply Command is output when the temperature sensor detects that the room temperature is the reference temperature or less during operation of the liquid fuel combustion burner device alone; and the stop power supply command is output when the temperature sensor detects that the room temperature has subsequently reached the reference temperature. Assume that this parallel operation mode is used when an outdoor temperature falls and the room temperature does not rise much. Then, heating by the liquid fuel combustion burner device may be supplemented by heating by the electric heater device. The room temperature may thereby be increased to the reference temperature or more.

The command generating section may have a function of changing the reference temperature according to a changed set temperature T. With this arrangement, control is performed based on the reference temperature appropriate for the set temperature. Thus, when this function is used, more appropriate control may be exercised.

The liquid fuel combustion burner device and the electric heater device may be arbitrary disposed and configured. To take an example, a housing which receives the liquid fuel combustion burner device and the electric heater device may be partitioned by a partitioning wall to define a first space region and a second space region therein. Then, the liquid fuel combustion burner device may be disposed in the first space region, and the electric heater device may be disposed in the second space region. Preferably, a first air outlet communicating with the first space region and a second air outlet communicating with the second space region are formed on a front face of the housing, and the second air outlet is located above the first air outlet. Then, preferably, the second space region is configured such that a hot air blown out from the second air outlet directs a hot air blown out from the first air outlet to an installation surface of the hybrid heating apparatus. With this arrangement, when heating by the liquid fuel combustion burner device is supplemented by heating by the electric heater device, a hot air from the liquid fuel combustion burner device may be prevented from rising early. A temperature difference among portions of a room may thereby be reduced as much as possible.

### BRIEF DESCRIPTION OF THE DRAWINGS

These and other objects and many of the attendant advantages of the present invention will be readily appreciated as the same becomes better understood by reference to the following detailed description when considered in connection with the accompanying drawings.
Fig. 1 is a longitudinal sectional view of a hybrid heating apparatus according to an embodiment of the present invention.
Fig. 2 is a block diagram showing an example control system in the embodiment of the present invention.

### DETAILED DESCRIPTION OF PREFERRED EMBODIMENT

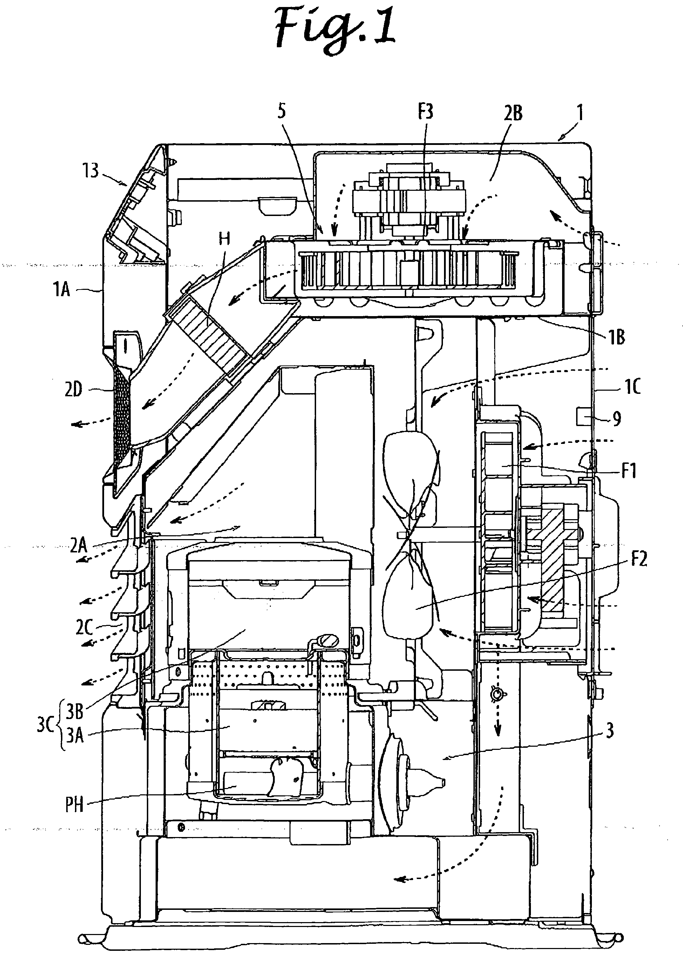

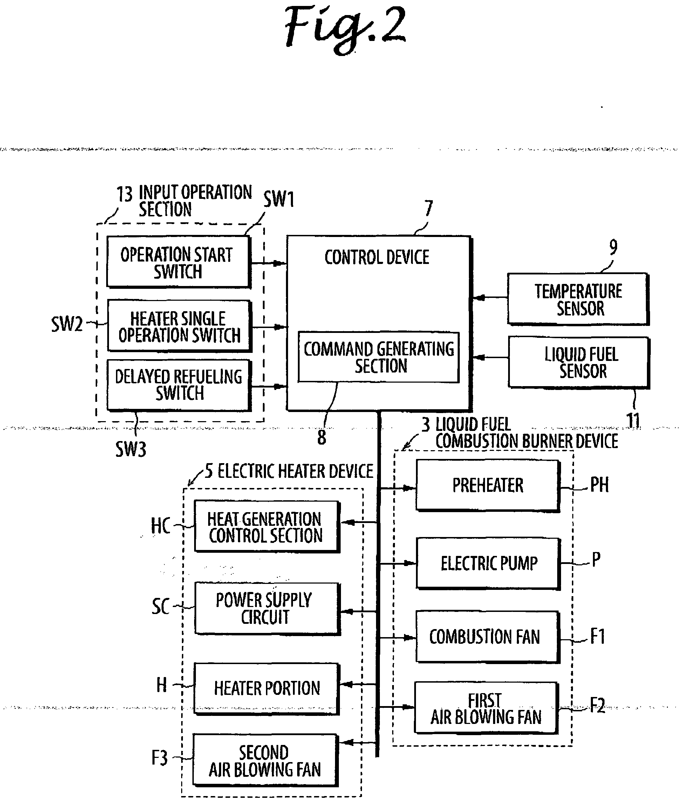

An embodiment of the present invention will be described below in detail with reference to the drawings-Fig. 1 is a longitudinal sectional view of a hybrid heating apparatus according to the embodiment of the present invention. Fig. 2 is a block diagram showing an example control system in this embodiment. The hybrid heating apparatus of this embodiment includes a liquid fuel combustion burner device 3, an electric heater device 5, and a control device 7 including a command generating section 8, as basic components. The liquid fuel combustion burner device 3 is configured to start combustion upon receipt of a start combustion command, to stop the combustion upon receipt of a stop combustion command, and to perform combustion according to a combustion amount indicated by a combustion control command upon receipt of the combustion control command. The electric heater device 5 is configured to start power supply to a heater portion upon receipt of a start power supply command and to stop the power supply to the heater portion upon receipt of a stop power supply command.

Referring to Fig. 1 showing a specific structure of the hybrid heating apparatus, the liquid fuel combustion burner device 3, the electric heater device 5, the control device 7 (in Fig. 2) including the command generating section 8, a temperature sensor 9, and an liquid fuel sensor 11 (in Fig. 2) are received in a housing 1. The command generating section 8 shown in Fig. 2 outputs various commands including the start combustion command, the stop combustion command, the start power supply command, and the stop power supply command according to one of predetermined control modes. The temperature sensor 9 configured to detect a room temperature is disposed near a ventilation hole formed in a rear panel 1C of the housing 1. The liquid fuel sensor 11 (in Fig. 2) may be constituted from a liquid surface detector for detecting a liquid surface in a fuel tank. An input operation section 13 including various switches and a display portion is provided in an upper region of a front panel 1A of the housing 1 on the page of Fig. 1. Though not shown, the control device 7 (in Fig. 2) including a microcomputer is disposed inside the housing 1 near the input operation section 13. As shown in Fig. 2, the input operation section 13 includes at least an operation start switch SW1, a heater single operation switch SW2, and a delayed refueling switch SW3.

The housing 1 is partitioned by a partitioning wall 1B to define a fist space region 2A and a second space region 2B. The liquid fuel combustion burner device 3 is disposed in the first space region 2A, and the electric heater device 5 is disposed in the second space region 2B. A first air outlet 2C communicating with the first space region 2A and a second air outlet 2D communicating with the second space region 2B are formed on a front face of the housing and the second air outlet 2D is located above the first air outlet 2C.

The liquid fuel combustion burner device 3 includes: a combustion portion (burner) 3C; a preheater PH; a combustion fan (first fan) F1; a first air blowing fan F2; and an electric pump P (in Fig. 2). The combustion portion 3C is constituted from a burner portion 3A and a combustion chamber 3B. The preheater PH is configured to preheat a liquid fuel in the combustion portion 3C before the liquid fuel combustion burner device 3 starts the combustion. The combustion fan (first fan) F1 is constituted from a centrifugal fan and is configured to supply air for combustion to the combustion portion 3C. The first air blowing fan F2 is constituted from an axial fan and is configured to send wind to the combustion chamber 3B. The electric pump P is configured to supply the liquid fuel to the burner portion 3A of the combustion portion 3C. In this embodiment, the combustion fan F1 and the first air blowing fan F2 have structures in which vanes of the combustion fan F1 and the first blowing fan F2 are attached to the same shaft.

The second space region 2B shown in Fig. 1 is configured such that a hot air blown from the second air outlet 2D directs a hot air blown from the first air outlet 2C to the installation surface of the hybrid heating apparatus. With this arrangement, when heating by the liquid fuel combustion burner device 3 is supplemented by heating by the electric heater device 5. a hot air from the liquid fuel combustion burner device 3 may be prevented from rising early. A temperature difference among portions of a room may thereby be reduced as much as possible.

The electric heater device 5 includes: a power supply circuit SC (Fig.2); a heater portion H; a heat generation control section HC (Fig.2); and a second air blowing fan F3. The heat generation control section HC is configured to control the power supply circuit SC to cause the heater portion H to generate heat according to an amount of heat generation indicated by a heat generation control command. The second air blowing fan F3 is constituted from a centrifugal fan and is configured to supply an airflow to the heater portion H in order to discharge the heat generated by the heater portion H. In this embodiment, a PTC (Positive Temperature Coefficient) ceramic heater is used as the heater portion H. Specifically, the heater portion H used herein includes two 400W PTC ceramic heaters. When the heat generation control section HC receives the heat generation control command for causing the heater portion H to generate a maximum amount of heat (of 800 W) from the command generating section 8, the heat generation control section HC causes the two heaters to generate heat by power supply from the power supply circuit SC according to the command. When the heat generation control section HC receives the heat generation control command for causing the heater portion H to generate a normal amount of heat smaller than the maximum amount of heat, the heat generation control section HC causes one heater to generate heat by power supply from the power supply circuit SC according to that command.

When the heat generation control section HC causes the heater portion H to generate the maximum amount of heat (of 800 W), the command generating section 8 gives to the second air blowing fan F3 a rotation command for rotating the second air blowing fan F3 to generate a maximum airflow. When the heat generation control section HC causes the heater portion H to generate the normal amount of heat (of 400W), the command generating section 8 gives to the second air blowing fan F3 the rotation command for rotating the second air blowing fan F3 to generate an airflow less than the maximum airflow. Then, the command generating section 8 stops output of the rotation command given to the second air blowing fan F3 at the same time as the command generating section 8 gives the stop power supply command to the power supply circuit SC of the electric heater device 5.

The control modes that are used by the command generating section 8 typically include a start operation mode, an out-of-fuel handling mode, a delayed refueling mode, a save fuel mode, and a parallel operation mode. When the operation start switch SW1 is turned on, the command generating section 8 selects the start operation mode. Then, the command generating mode outputs the start combustion command to the liquid fuel combustion burner device 3. The start combustion command includes a preheater power supply command for causing the preheater H to perform preheating for a predetermined preheating period of time, a start blowing command for causing the combustion fan F1 to start a blowing operation, and a start refueling command for causing the electric pump P to start a refueling operation.

In this embodiment, the first air blowing fan F2, together with the combustion fan Fl, starts a blowing operation. Then, in the start operation mode, the start power supply command is output to the power supply circuit SC of the electric heater device 5 at the same time or being slightly delayed from the start combustion command, and the heat generation control command for causing the heat generation control section HC to generate the amount (normal amount of) heat less than the maximum amount of heat is output. Then, when a predetermined period of time (such as 15 to 20 seconds) elapses, the heat generation control command for causing the heat generation control section HC of the electric heater device 5 to generate the maximum amount of heat is output. This operation is performed in order to prevent overcurrent from flowing when the hybrid heating apparatus starts operation. Then, when a room temperature detected by the operation sensor 9 exceeds a predetermined reference temperature (in a range of 17° to 19°, for example), the stop power supply command is output to the power supply circuit SC. When power is supplied to the preheater PH in the liquid fuel combustion burner device 3 for a predetermined preheating period of time in the start operation mode, the amount of heat generated by the electric heater device 5 is set to be reduced. For that reason, when the operation of the hybrid heating apparatus is started, no large current flows. A current that is necessary and sufficient for the preheater PH may thus be supplied to the preheater PH. Then, when the predetermined period of time (such as 20 seconds, necessary for starting combustion) elapses, the electric heater device 5 is made to generate the maximum amount of heat. With this arrangement, heating is performed by the maximum amount of heat generated by the electric heater device 5 until the combustion by the burner device is performed on a full scale. Then, when the room temperature exceeds the reference temperature (such as 18°C, which does not necessarily need the heating by the electric heater device 5), the command generating section 8 outputs the stop power supply command to the electric heater device 5. Then, heating by the burner device 3 is performed. With this arrangement, operation of the burner device 3 may be started without fail, and heating by the electric heater device 5 may supplement heating by the burner device 3 until combustion by the burner device 3 is performed on the full scale. Then, when the room temperature exceeds the temperature (such as 18°C) sufficient for continuing heating by the burner device 3 alone, the heating by the electric heater device 5 is stopped. Thus, electric power consumption may be reduced.

The start operation mode is not limited to the sequence used in this embodiment. The amount of heat generated by the electric heater device during the preheating period of time of the preheater PH and a time when power supply to the electric heater device is started may arbitrarily beset. If the preheating period of time is long, for example, the electric heater device 5 may be configured to generate the maximum amount of heat at the same time that power supply to the preheater PH is started. With this arrangement, the room temperature may be increased to the reference temperature earliest. Alternatively, power supply to the electric heater 5 may be started when a predetermined period of time elapses after power supply to the preheater PH has been started. If the preheating period of time is short, power supply to the electric heater device 5 is not started during power supply of the preheater PH for preheating, and power supply to the electric heater device 5 may be started after the power supply to the preheater PH has been completed.

In the out-of-fuel handling mode included in the control modes , when the liquid fuel sensor 11 detects running out of the liquid fuel, the command generating section 8 outputs the stop combustion command to the burner device 3, and then outputs the start power supply command to the power supply circuit SC of the electric heater device 5. When a predetermined minimum period of power supply (such as one hour) then elapses after the start power supply command has been output to the power supply circuit SC, the command generating section 8 outputs the stop power supply command to the power supply circuit SC. In the out-of-fuel handling mode, after running out of the liquid fuel has been detected, the operation of the hybrid heating apparatus is switched to heating by the electric heater device 5 as in a related art. However, when the predetermined minimum period of power supply then elapses, the stop power supply command is output to the electric heater device 5 from the command generating section 8, and heating by the electric heater device 5 is thereby stopped. The heating by the electric heater device 5 is stopped after the elapse of the minimum period of power supply as mentioned above, which informs the user of the need for refueling. The minimum period of power supply should be set to a period of time during which the liquid fuel may be at least refueled. Assuming that a spare fuel tank filled with the liquid fuel is present, it suffices to set this minimum period of power supply to approximately one hour.

Assume that, in the delayed refueling mode included in the control modes, the delayed refueling switch SW3 mounted on the input operation section 13 is depressed in order to extend a period until the liquid fuel is refueled. Then, the liquid fuel combustion burner device 3 is operated so that the combustion amount of the liquid fuel combustion burner device 3 is reduced. Specifically, in the delayed refueling handling mode, when the delay refueling command is input to the command generating section 8 by operating the delayed refueling switch SW3 (input portion for delayed refueling) by the user, the command generating section 8 outputs to the electric pump P the combustion control command for minimizing the combustion amount of the liquid fuel combustion burner device 3. When the liquid fuel sensor 11 detects running out of the liquid fuel, the command generating section 8 outputs the stop combustion command to the electric pump P and the combustion fan F1. Then, the command generating section 8 outputs the start power supply command to the power supply circuit SC of the electric heater device 5. When an extended period of power supply (such as eight hours) longer than the minimum period of power supply (such as one hour) elapses after the start power supply command has been output, the command generating section 8 outputs the stop power supply command. The user performs an operation to delay refueling, being conscious of a situation where refueling cannot be performed at once (due to a lack of the stored liquid fuel or the like) . Under such a situation, the user rarely forgets the need for refueling. Then, under such a situation, the user desires to extend the period of heating as long as possible. Further, under such a situation, even if running out of the liquid fuel has been detected, the liquid fuel often cannot be refueled at once- Then, in the delayed refueling mode, after the start power supply command has been output to the electric heater device 5 from the command generating section 8 and heating by the electric heater device 5 has been then started, heating by the electric heater alone is continued until the extended period of power supply (such as eight hours) longer than the minimum period of power supply elapses. Then, unless a stop operation command is input by an off operation of the operation start switch before the elapse of the extended period of power supply, the command generating unit 8 outputs the stop power supply command to stop the heating by the electric heater device 5. With this arrangement, the user, who is conscious of running out of the liquid fuel, may be prevented as much as possible from feeling uncomfortable due to an early stop of heating. Preferably, this extended period of power supply is a long period of time such as eight hours or half a day that makes it possible to purchase the liquid fuel.

In the save fuel mode included in the control modes, when the temperature sensor 9 detects an increase in the room temperature by a predetermined temperature t1 (in the range of 3 to 5 °C, for example) from a set temperature T set by temperature setting means not shown during operation of the liquid fuel combustion burner device 3 alone, the command generating section 8 outputs the stop combustion command to the electric pump P and the combustion fan F1. That is, when the room temperature exceeds the set temperature even if heating by the liquid fuel combustion burner device 3 is continued to be controlled, the heating by the liquid fuel combustion burner device 3 is stopped. After that, when the room temperature decreases by a predetermined temperature t2 (in the range from 1 to 2°C, for example) lower than the predetermined temperature t1, the command generating section 8 outputs the start power supply command to the electric heater device 5. With this operation, when the room temperature slightly decreases after stop of the operation of the liquid fuel combustion burner device 3. heating by the electric heater device 5 alone is performed. When the room temperature subsequently drops down to the set temperature T or less, the command generating section 8 outputs the start combustion command to the liquid fuel combustion burner device 3, and also outputs the stop power supply command to the electric heater device 5. With this operation, the heating by the liquid fuel combustion burner device 3 is resumed, and the heating by the electric heater device 5 alone is stopped. Unless the room temperature drops down to the set temperature T or less, the heating by the electric heater device 5 is continued. As described above, the joint use of the liquid fuel combustion burner device 3 and the electric heater device 5 may save the liquid fuel more than when temperature control is performed by repeated operations to start and stop the liquid fuel combustion burner device 3. Odor produced due to the operation and stop of the liquid fuel combustion burner device 3 and carbon dioxide generated due to combustion may thereby be reduced.

In the parallel operation mode included in the control modes, when the temperature sensor detects that the room temperature is the reference temperature or less during operation of the liquid fuel combustion burner device 3 alone, the command generating section 8 outputs the start power supply command to the electric heater device 5-Accordingly, heating by use of both of the liquid fuel combustion burner device 3 and the electric heater device 5 is then performed. When the temperature sensor detects the room temperature has subsequently reached the reference temperature, the command generating unit 8 outputs the stop power supply command to the electric heater device 5, thereby stopping the electric heater device 5. According to the parallel operation mode, when an outdoor temperature falls and the room temperature does not increase, the room temperature may be increased to the reference temperature or more by the help of heating by the electric heater device 5 which supplements heating by the liquid fuel combustion burner device 3.

The command generating section 8 may have a function of changing the reference temperature according to a changed set temperature T. For example, the command generating section 8 may include the function of changing a temperature lower than the set temperature T by a predetermined temperature (in the range of 2 to 3°C) to the reference temperature. When the set temperature T is set to 20°C. the reference temperature is set to 18°C. When the set temperature T is set to 25°C, the reference temperature is set to 23°C. In this manner, the reference temperature is changed according to the changed set temperature T. When this function is used, more appropriate control may be exercised based on the reference temperature appropriate to the set temperature.

The control modes in this embodiment may further include a fail safe mode and a refueling-time fire-prevention mode, in addition to the above-mentioned control modes. In the fail safe mode, the command generating section 8 outputs the stop operation command and the stop power supply command to stop operations of the liquid fuel combustion burner device 3 and electric heated device 5, when a predetermined period of time elapses . In the refueling-time fire-prevention mode, the command generating section 8 outputs the stop operation command and the stop power supply command in order to stop operations of the liquid fuel combustion burner device 3 and the electric heater device 5 when a fuel tank is opened for refueling the liquid fuel.

According to the present invention, when running out of the liquid fuel is detected, operation of the hybrid heating apparatus is switched to heating by the electric heater device. Then, when the predetermined minimum period of power supply elapses, the stop power supply command is output. The heating by the electric heater device is thereby stopped. As a result, according to the present invention, stopped heating by the electric heater device may inform the user of the need for refueling.

While the preferred embodiments of the invention have been described with a certain degree of particularity with reference to the drawings, obvious modifications and variations are possible in light of the above teachings. It is therefore to be understood that within the scope of the appended claims, the invention may be practiced otherwise than as specifically described.

## Claims

1. A hybrid heating apparatus comprising:
a liquid fuel combustion burner device (3) configured to start combustion upon receipt of a start combustion command, to stop the combustion upon receipt of a stop combustion command, and to perform combustion according to a combustion amount indicated by a combustion control command upon receipt of the combustion control command;
an electric heater device (5) configured to start power supply to a heater portion (H) upon receipt of a start power supply command and to stop the power supply to the heater portion (H) upon receipt of a stop power supply command; and
a control device (7) comprising a command generating section (8),
the command generating section (8) configured to output the start combustion command, the stop combustion command, the start power supply command, and the stop power supply command according to one of predetermined control modes,
the hybrid heating apparatus further includes a liquid fuel sensor (11) configured to detect running out of a liquid fuel; and
the control device (7) being configured to perform the predetermined control modes including an out-of-fuel handling mode in which the command generating section (8) is configured to output the stop combustion command when the liquid fuel sensor (11) detects running out of the liquid fuel; the command generating section (8) being further configured to subsequently output the start power supply command; and **characterized in that**:
the command generating section (8)is configured then to output the stop power supply command when a predetermined minimum period of power supply elapses after the start power supply command has been output.

2. The hybrid heating apparatus according to claim 1, wherein:
the hybrid heating apparatus further includes an input portion for delayed refueling (SW3); and
the control device (7) is configured to perform the control modes including a delayed refueling mode in which the command generating section (8) is configured to output a combustion control command for minimizing the combustion amount of the liquid fuel combustion burner device (3) when a delay refueling command is input to the command generating section (8) by operating the input portion for delayed refueling (SW3) by a user, to output the stop combustion command when the liquid fuel sensor (11) detects running out of the liquid fuel, and to subsequently output the start power supply command; and then to output the stop power supply command when an extended period of power supply longer than the minimum period of power supply elapses after the start power supply command has been output.

3. The hybrid heating apparatus according to claim 1, wherein:
the hybrid heating apparatus further includes a temperature sensor (9) configured to detect a room temperature;
the liquid fuel combustion burner device (3) includes:
a preheater (PH) configured to preheat a liquid fuel in the combustion portion (3C) before the liquid fuel combustion burner device (3) starts the combustion;
a first fan (F1) configured to supply air for combustion to the combustion portion (3C); and
an electric pump (P) configured to supply the liquid fuel to the combustion portion (3C);
the electric heater device (5) includes:
a heat generation control section (HC) configured to cause the heater portion (H) to generate heat according to an amount of heat generation indicated by a heat generation control command; and
a second fan (F3) configured to supply an airflow to the heater portion (H) in order to discharge the heat generated by the heater portion (H);
the start combustion command includes a preheater power supply command for causing the preheater (PH) to perform preheating for a predetermined preheating period of time, a start blowing command for causing the first fan (F1) to start a blowing operation, and a start refueling command, for causing the electric pump (P) to start a refueling operation; and
the control device (7) is configured to perform the control modes including a start operation mode in which the command generating section (8) is configured to output the start combustion command; to output the start power supply command and the heat generation control command for indicating a predetermined amount of heat generation to the electric heater device (5); and then to output the stop power supply command when the room temperature exceeds a predetermined reference temperature.

4. The hybrid heating apparatus according to claim 3, wherein
the heat generation control command has a command sequence of causing the electric heater device (5) to generate an amount of heat less than a maximum amount of heat until the predetermined preheating period of time is completed, and causing the electric heater device (5) to generate the maximum amount of heat when the preheating period of time is completed.

5. The hybrid heating apparatus according to claim 3, wherein
the heat generation control command causes the electric heater device (5) to generate a maximum amount of heat when the preheating period of time is started.

6. The hybrid heating apparatus according to claim 3, wherein
in the start operation mode, the start power supply command and the heat generation control command are output when a predetermined period of time elapses after the preheater power supply command has been output.

7. The hybrid heating apparatus according to claim 3, wherein
the control device (7) is configured to perform the control modes including a save fuel mode in which the command generating section (8) is configured to output the stop combustion command when the temperature sensor (9) detects an increase in the room temperature by a predetermined temperature t1 from a set temperature T during operation of the liquid fuel combustion burner device (3) alone; then to output the start power supply command when the room temperature subsequently decreases by a predetermined temperature t2 lower than the predetermined temperature t1; and then to output the start combustion command and also to output the stop power supply command when the room temperature subsequently drops down to the set temperature T or less.

8. The hybrid heating apparatus according to claim 3, wherein
the command generating section (8) is configured to output the control modes including a parallel operation mode in which the command generating section (8) is configured to output the start power supply command when the temperature sensor (9) detects that the room temperature is the reference temperature or less during operation of the liquid fuel combustion burner device (3) alone; and then to output the stop power supply command when the temperature sensor (9) detects that the room temperature has subsequently reached the reference temperature.

9. The hybrid heating apparatus according to claim 7 or 8, wherein
the command generating section (8) has a function of changing the reference temperature according to a changed set temperature T.

10. The hybrid heating apparatus according to claim 1, wherein:
the liquid fuel combustion burner device (3) and the electric heater device (5) are received in a housing (1);
the housing (1) is partitioned by a partitioning wall (1B) to define a first space region (2A) and a second space region (2B) therein;
the liquid fuel combustion burner device (3) is disposed in the first space region (2A), and the electric heater device (5) is disposed in the second space region (2B);
a first air outlet (2C) communicating with the first space region (2A) and a second air outlet (2D) communicating with the second space region (2B) are formed on a front face of the housing and the second air outlet (2D) is located above the first air outlet (2C); and
the second space region (2B) is configured such that a hot air blown out from the second air outlet (2D) directs a hot air blown out from the first air outlet (2C) to an installation surface of the hybrid heating apparatus.

## Patentansprüche

1. Hybrid-Heizvorrichtung, umfassend:
eine Flüssigbrennstoffverbrennungs-Brennereinrichtung (3), die eingerichtet ist, um bei Empfang eines Verbrennungsstartbefehls eine Verbrennung zu starten, um bei Empfang eines Verbrennungsstoppbefehls die Verbrennung zu stoppen und um bei Empfang eines Verbrennungssteuerbefehls eine Verbrennung gemäß einer Verbrennungsmenge durchzuführen, die durch den Verbrennungssteuerbefehl angegeben wird;
eine elektrische Heizgeräteinrichtung (5), die eingerichtet ist, um bei Empfang eines Energiezufuhrstartbefehls eine Energiezufuhr zu einem Heizgerätabschnitt (H) zu starten und um bei Empfang eines Energiezufuhrstoppbefehls die Energiezufuhr zu dem Heizgerätabschnitt (H) zu stoppen; und
eine Steuervorrichtung (7), die einen Befehlserzeugungsabschnitt (8) umfasst,
wobei der Befehlserzeugungsabschnitt (8) eingerichtet ist, um den Verbrennungsstartbefehl, den Verbrennungsstoppbefehl, den Energiezufuhrstartbefehl und den Energiezufuhrstoppbefehl gemäß einem der vorbestimmten Steuermodi auszugeben,
wobei die Hybrid-Heizvorrichtung ferner einen Flüssigbrennstoffsensor (11) aufweist, der eingerichtet ist, um ein Ausgehen eines Flüssigbrennstoffs zu erfassen; und
wobei die Steuervorrichtung (7) eingerichtet ist, um die vorbestimmten Steuermodi durchzuführen, einschließlich eines Handhabungsmodus bei ausgegangenem Brennstoff, in dem der Befehlserzeugungsabschnitt (8) eingerichtet ist, um den Verbrennungsstoppbefehl auszugeben, wenn der Flüssigbrennstoffsensor (11) ein Ausgehen des Flüssigbrennstoffs erfasst;
wobei der Befehlserzeugungsabschnitt (8) ferner eingerichtet ist, um nachfolgend den Energiezufuhrstartbefehl auszugeben; und**dadurch gekennzeichnet, dass**:
der Befehlserzeugungsabschnitt (8) eingerichtet ist, um dann den Energiezufuhrstoppbefehl auszugeben, wenn ein vorbestimmter Mindestzeitraum einer Energiezufuhr verstrichen ist, nachdem der Energiezufuhrstartbefehl ausgegeben wurde.

2. Hybrid-Heizvorrichtung nach Anspruch 1, wobei:
die Hybrid-Heizvorrichtung ferner einen Eingabeabschnitt für ein verzögertes Auftanken (SW3) aufweist; und
die Steuervorrichtung (7) eingerichtet ist, um die Steuermodi durchzuführen, einschließlich eines Modus bei verzögertem Auftanken, in dem der Befehlserzeugungsabschnitt (8) eingerichtet ist, um einen Verbrennungssteuerbefehl auszugeben, um die Verbrennungsmenge der Flüssigbrennstoffverbrennungs-Brennereinrichtung (3) zu minimieren, wenn ein Auftankverzögerungsbefehl in den Befehlserzeugungsabschnitt (8) eingegeben wird, indem der Eingabeabschnitt für ein verzögertes Auftanken (SW3) von einem Benutzer betätigt wird, um den Verbrennungsstoppbefehl auszugeben, wenn der Flüssigbrennstoffsensor (11) ein Ausgehen des Flüssigbrennstoffs erfasst, und um nachfolgend den Energiezufuhrstartbefehl auszugeben; und um dann den Energiezufuhrstoppbefehl auszugeben, wenn ein ausgedehnter Zeitraum einer Energiezufuhr, der länger ist als der Mindestzeitraum einer Energiezufuhr, verstrichen ist, nachdem der Energiezufuhrstartbefehl ausgegeben wurde.

3. Hybrid-Heizvorrichtung nach Anspruch 1, wobei:
die Hybrid-Heizvorrichtung ferner einen Temperatursensor (9) aufweist, der eingerichtet ist, um eine Raumtemperatur zu erfassen;
die Flüssigbrennstoffverbrennungs-Brennereinrichtung (3) aufweist:
ein Vorheizgerät (PH), das eingerichtet ist, um einen Flüssigbrennstoff in dem Verbrennungsabschnitt (3C) vorzuheizen, bevor die Flüssigbrennstoffverbrennungs-Brennereinrichtung (3) die Verbrennung startet;
ein erstes Gebläse (F1), das eingerichtet ist, um dem Verbrennungsabschnitt (3C) Luft zur Verbrennung zuzuführen; und
eine elektrische Pumpe (P), die eingerichtet ist, um dem Verbrennungsabschnitt (3C) Flüssigbrennstoff zuzuführen;
die elektrische Heizgeräteinrichtung (5) aufweist:
einen Wärmeerzeugungs-Steuerabschnitt (HC), der eingerichtet ist, um den Heizgerätabschnitt (H) zu veranlassen, Wärme gemäß einem Betrag einer Wärmeerzeugung zu erzeugen, der durch einen Wärmeerzeugungs-Steuerbefehl angegeben wird; und ein zweites Gebläse (F3), das eingerichtet ist, um dem Heizgerätabschnitt (H) einen Luftstrom zuzuführen, um die durch den Heizgerätabschnitt (H) erzeugte Wärme abzuleiten;
der Verbrennungsstartbefehl einen Vorheizgerät-Energiezufuhrbefehl zum Veranlassen des Vorheizgeräts (PH), ein Vorheizen für einen vorbestimmten Vorheizzeitraum durchzuführen, einen Gebläsestartbefehl zum Veranlassen des ersten Gebläses (F1), einen Gebläsebetrieb zu starten, und einen Auftankstartbefehl zum Veranlassen der elektrischen Pumpe (P), einen Auftankbetrieb zu starten, umfasst; und
die Steuervorrichtung (7) eingerichtet ist, um die Steuermodi durchzuführen, einschließlich eines Startbetriebsmodus, in dem der Befehlserzeugungsabschnitt (8) eingerichtet ist, um den Verbrennungsstartbefehl auszugeben, den Energiezufuhrstartbefehl und den Wärmeerzeugungs-Steuerbefehl an die elektrische Heizgeräteinrichtung (5) auszugeben, um einen vorbestimmten Betrag einer Wärmeerzeugung anzugeben, und um dann den Energiezufuhrstoppbefehl auszugeben, wenn die Raumtemperatur eine vorbestimmte Referenztemperatur überschreitet.

4. Hybrid-Heizvorrichtung nach Anspruch 3, wobei
der Wärmeerzeugungs-Steuerbefehl eine Befehlsabfolge aufweist, um die elektrische Heizgeräteinrichtung (5) zu veranlassen, eine Wärmemenge zu erzeugen, die kleiner ist als eine maximale Wärmemenge, bis der vorbestimmte Vorheizzeitraum abgeschlossen ist, und um die elektrische Heizgeräteinrichtung (5) zu veranlassen, die maximale Wärmemenge zu erzeugen, wenn der Vorheizzeitraum abgeschlossen ist.

5. Hybrid-Heizvorrichtung nach Anspruch 3, wobei
der Wärmeerzeugungs-Steuerbefehl die elektrische Heizgeräteinrichtung (5) veranlasst, eine maximale Wärmemenge zu erzeugen, wenn der Vorheizzeitraum begonnen hat.

6. Hybrid-Heizvorrichtung nach Anspruch 3, wobei
in dem Startbetriebsmodus der Energiezufuhrstartbefehl und der Wärmeerzeugungs-Steuerbefehl ausgegeben werden, wenn ein vorbestimmter Zeitraum verstrichen ist, nachdem der Vorheizgerät-Energiezufuhrbefehl ausgegeben wurde.

7. Hybrid-Heizvorrichtung nach Anspruch 3, wobei
die Steuervorrichtung (7) eingerichtet ist, um die Steuermodi durchzuführen, einschließlich eines Brennstoffeinsparmodus, in dem der Befehlserzeugungsabschnitt (8) eingerichtet ist, um den Verbrennungsstoppbefehl auszugeben, wenn der Temperatursensor (9) einen Anstieg der Raumtemperatur um eine vorbestimmte Temperatur t1 von einer festgelegten Temperatur T während eines alleinigen Betriebs der Flüssigbrennstoffverbrennungs-Brennereinrichtung (3) erfasst; um dann den Energiezufuhrstartbefehl auszugeben, wenn die Raumtemperatur nachfolgend um eine vorbestimmte Temperatur t2 abnimmt, welche niedriger ist als die vorbestimmte Temperatur t1; und um dann den Verbrennungsstartbefehl auszugeben und auch um den Energiezufuhrstoppbefehl auszugeben, wenn die Raumtemperatur nachfolgend auf die festgelegte Temperatur T oder darunter fällt.

8. Hybrid-Heizvorrichtung nach Anspruch 3, wobei
der Befehlserzeugungsabschnitt (8) eingerichtet ist, um die Steuermodi auszugeben, einschließlich eines Parallelbetriebsmodus, in dem der Befehlserzeugungsabschnitt (8) eingerichtet ist, um den Energiezufuhrstartbefehl auszugeben, wenn der Temperatursensor (9) erfasst, dass die Raumtemperatur während eines alleinigen Betriebs der Flüssigbrennstoffverbrennungs-Brennereinrichtung (3) der Referenztemperatur oder weniger entspricht, und um dann den Energiezufuhrstoppbefehl auszugeben, wenn der Temperatursensor (9) erfasst, dass die Raumtemperatur nachfolgend die Referenztemperatur erreicht hat.

9. Hybrid-Heizvorrichtung nach Anspruch 7 oder 8, wobei
der Befehlserzeugungsabschnitt (8) eine Funktion zum Ändern der Referenztemperatur gemäß einer veränderten festgelegten Temperatur T aufweist.

10. Hybrid-Heizvorrichtung nach Anspruch 1, wobei:
die Flüssigbrennstoffverbrennungs-Brennereinrichtung (3) und die elektrische Heizgeräteinrichtung (5) in einem Gehäuse (1) aufgenommen sind;
das Gehäuse (1) durch eine Trennwand (1B) unterteilt ist, um einen ersten Raumbereich (2A) und einen zweiten Raumbereich (2B) darin zu definieren;
die Flüssigbrennstoffverbrennungs-Brennereinrichtung (3) in dem ersten Raumbereich (2A) angeordnet ist und die elektrische Heizgeräteinrichtung (5) in dem zweiten Raumbereich (2B) angeordnet ist;
ein erster Luftauslass (2C), der mit dem ersten Raumbereich (2A) in Verbindung steht, und ein zweiter Luftauslass (2D), der mit dem zweiten Raumbereich (2B) in Verbindung steht, auf einer Vorderfläche des Gehäuses gebildet sind und sich der zweite Luftauslass (2D) über dem ersten Luftauslass (2C) befindet; und
der zweite Raumbereich (2B) derart eingerichtet ist, dass heiße Luft, die aus dem zweiten Luftauslass (2D) geblasen ist, heiße Luft, die aus dem ersten Luftauslass (2C) geblasen wird, zu einer Installationsfläche der Hybrid-Heizvorrichtung leitet.

## Revendications

1. Appareil de chauffage hybride comprenant :
un dispositif de brûleur à combustion de combustible liquide (3) configuré pour démarrer la combustion à réception d'une instruction de démarrage de combustion, pour arrêter la combustion à réception d'une instruction d'arrêt de combustion, et pour réaliser une combustion en fonction d'une quantité de combustion indiquée par une instruction de commande de combustion à réception de l'instruction de commande de combustion ;
un dispositif de chauffage électrique (5) configuré pour démarrer l'alimentation en courant d'une partie de chauffage (H) à réception d'une instruction de démarrage d'alimentation en courant et pour arrêter l'alimentation en courant de la partie de chauffage (H) à réception d'une instruction d'arrêt d'alimentation en courant ; et
un dispositif de contrôle (7) comprenant une section de génération d'instruction (8),
la section de génération d'instruction (8) étant configurée pour faire sortir l'instruction de démarrage de combustion, l'instruction d'arrêt de combustion, l'instruction de démarrage d'alimentation en courant et l'instruction d'arrêt d'alimentation en courant en fonction de l'un des modes de commande prédéterminés,
l'appareil de chauffage hybride comprenant en outre un capteur de combustible liquide (11) configuré pour détecter le manque de combustible liquide ; et
le dispositif de contrôle (7) étant configuré pour réaliser les modes de commande prédéterminés comprenant un mode de gestion de manque de combustible où la section de génération d'instruction (8) est configurée pour faire sortir l'instruction d'arrêt de combustion lorsque le capteur de combustible liquide (11) détecte le manque de combustible liquide ;
la section de génération d'instruction (8) étant en outre configurée pour faire sortir de manière subséquente l'instruction de démarrage d'alimentation en courant ; et **caractérisé en ce que** :
la section de génération d'instruction (8) est configurée pour faire ensuite sortir l'instruction d'arrêt d'alimentation en courant lorsqu'une période minimale prédéterminée d'alimentation en courant s'écoule après avoir fait sortir l'instruction de démarrage d'alimentation en courant.

2. Appareil de chauffage hybride selon la revendication 1, dans lequel :
l'appareil de chauffage hybride comprend en outre une partie d'entrée pour le ravitaillement différé (SW3) ; et
le dispositif de contrôle (7) est configuré pour réaliser les modes de commande comprenant un mode de ravitaillement différé où la section de génération d'instruction (8) est configurée pour faire sortir une instruction de commande de combustion pour minimiser la quantité de combustion du dispositif de brûleur à combustion de combustible liquide (3) lorsque l'on fait entrer une instruction de ravitaillement différé dans la section de génération d'instruction (8) en actionnant la partie d'entrée pour le ravitaillement différé (SW3) grâce à un utilisateur, pour faire sortir l'instruction d'arrêt de combustion lorsque le capteur de combustible liquide (11) détecte le manque de combustible liquide, et pour faire sortir de manière subséquente l'instruction de démarrage d'alimentation en courant ; et pour ensuite faire sortir l'instruction d'arrêt d'alimentation en courant lorsqu'une période prolongée d'alimentation en courant plus longue que la période minimale d'alimentation en courant s'écoule après avoir fait sortir l'instruction de démarrage d'alimentation en courant.

3. Appareil de chauffage hybride selon la revendication 1, dans lequel :
l'appareil de chauffage hybride comprend en outre un capteur de température (9) configuré pour détecter une température ambiante ;
le dispositif de brûleur à combustion de combustible liquide (3) comprend :
un préchauffeur (PH) configuré pour préchauffer un combustible liquide dans la partie de combustion (3C) avant que le dispositif de brûleur à combustion de combustible liquide (3) démarre la combustion ;
un premier ventilateur (F1) configuré pour fournir de l'air pour la combustion à la partie de combustion (3C) ; et
une pompe électrique (P) configurée pour fournir le combustible liquide à la partie de combustion (3C) ;
le dispositif de chauffage électrique (5) comprend :
une section de commande de génération de chaleur (HC) configurée pour faire en sorte que la partie de chauffage (H) génère de la chaleur en fonction d'une quantité de génération de chaleur indiquée par une instruction de commande de génération de chaleur ; et
un deuxième ventilateur (F3) configuré pour fournir un flux d'air à la partie de chauffage (H) afin de décharger la chaleur générée par la partie de chauffage (H) ;
l'instruction de démarrage de combustion comprend une instruction d'alimentation en courant de préchauffeur pour faire en sorte que le préchauffeur (PH) effectue un préchauffage pour une période de temps de préchauffage prédéterminée, une instruction de démarrage de soufflage pour faire en sorte que le premier ventilateur (P1) démarre une opération de soufflage, et une instruction de démarrage de ravitaillement pour faire en sorte que la pompe électrique (P) démarre une opération de ravitaillement ; et
le dispositif de contrôle (7) est configuré pour réaliser les modes de commande comprenant un mode de démarrage de fonctionnement où la section de génération d'instruction (8) est configurée pour faire sortir l'instruction de démarrage de combustion ; pour faire sortir l'instruction de démarrage d'alimentation en courant et l'instruction de commande de génération de chaleur pour indiquer une quantité prédéterminée de génération de chaleur pour le dispositif de chauffage électrique (5) ; et pour ensuite faire sortir l'instruction d'arrêt d'alimentation en courant lorsque la température ambiante dépasse une température de référence prédéterminée.

4. Appareil de chauffage hybride selon la revendication 3, dans lequel
l'instruction de commande de génération de chaleur a une séquence d'instructions pour faire en sorte que le dispositif de chauffage électrique (5) génère une quantité de chaleur inférieure à une quantité maximale de chaleur jusqu'à ce que la période de temps de préchauffage prédéterminée s'achève, et faire en sorte que le dispositif de chauffage électrique (5) génère la quantité maximale de chaleur lorsque la période de temps de préchauffage s'achève.

5. Appareil de chauffage hybride selon la revendication 3, dans lequel
l'instruction de commande de génération de chaleur fait en sorte que le dispositif de chauffage électrique (5) génère une quantité maximale de chaleur lorsque la période de temps de préchauffage démarre.

6. Appareil de chauffage hybride selon la revendication 3, dans lequel
dans le mode de démarrage de fonctionnement, on fait sortir l'instruction de démarrage d'alimentation en courant et l'instruction de commande de génération de chaleur lorsqu'une période de temps prédéterminée s'écoule après avoir fait sortir l'instruction d'alimentation en courant du préchauffeur.

7. Appareil de chauffage hybride selon la revendication 3, dans lequel
le dispositif de contrôle (7) est configuré pour réaliser les modes de commande comprenant un mode d'économie de combustible où la section de génération d'instruction (8) est configurée pour faire sortir l'instruction d'arrêt de combustion lorsque le capteur de température (9) détecte une augmentation de la température ambiante de l'ordre d'une température prédéterminée t1 par rapport à une température de consigne T pendant le fonctionnement du dispositif de brûleur à combustion de combustible liquide (3) à lui seul ; pour ensuite faire sortir l'instruction de démarrage d'alimentation en courant lorsque la température ambiante diminue de manière subséquente de l'ordre d'une température prédéterminée t2 inférieure à la température prédéterminée t1 ; et pour ensuite faire sortir l'instruction de démarrage de combustion et pour également faire sortir l'instruction d'arrêt d'alimentation en courant lorsque la température ambiante chute de manière subséquente à la température de consigne T ou moins.

8. Appareil de chauffage hybride selon la revendication 3, dans lequel
la section de génération d'instruction (8) est configurée pour faire sortir les modes de commande comprenant un mode de fonctionnement parallèle où la section de génération d'instruction (8) est configurée pour faire sortir l'instruction de démarrage d'alimentation en courant lorsque le capteur de température (9) détecte que la température ambiante est la température de référence ou moins pendant le fonctionnement du dispositif de brûleur à combustion de combustible liquide (3) à lui seul ; et pour ensuite faire sortir l'instruction d'arrêt d'alimentation en courant lorsque le capteur de température (9) détecte que la température ambiante a atteint de manière subséquente la température de référence.

9. Appareil de chauffage hybride selon la revendication 7 ou 8, dans lequel
la section de génération d'instruction (8) a une fonction de changement de la température de référence en fonction d'une température de consigne T modifiée.

10. Appareil de chauffage hybride selon la revendication 1, dans lequel :
le dispositif de brûleur à combustion de combustible liquide (3) et le dispositif de chauffage électrique (5) sont réceptionnés dans un carter (1) ;
le carter (1) est divisé par une cloison (1B) pour définir une première zone spatiale (2A) et une deuxième zone spatiale (2B) dans celui-ci ;
le dispositif de brûleur à combustion de combustible liquide (3) est disposé dans la première zone spatiale (2A), et le dispositif de chauffage électrique (5) est disposé dans la deuxième zone spatiale (2B) ;
une première sortie d'air (2C) communiquant avec la première zone spatiale (2A) et une deuxième sortie d'air (2D) communiquant avec la deuxième zone spatiale (2B) sont formées sur une face avant du carter, et la deuxième sortie d'air (2D) est située au-dessus de la première sortie d'air (2C) ; et
la deuxième zone spatiale (2B) est configurée de manière à ce que de l'air chaud soufflé par la deuxième sortie d'air (2D) dirige de l'air chaud soufflé par la première sortie d'air (2C) vers une surface d'installation de l'appareil de chauffage hybride.
